# EUROPÄISCHE PATENTSCHRIFT

(11) **EP 0 906 484 B1**
(45) Veröffentlichungstag und Bekanntmachung des Hinweises auf die Patenterteilung: **24.10.2001**
(21) Anmeldenummer: 97931673.4
(22) Anmeldetag: 21.06.1997
(51) Int. Cl.: E05F 15/00, F16P 3/12, H02H 5/10

(54) **ELEKTRISCHE SCHALTEINRICHTUNG MIT RUHESTROMÜBERWACHUNG**
ELECTRIC SWITCH WITH STATIC CURRENT MONITORING
COMMUTATEUR ELECTRIQUE A SURVEILLANCE DU COURANT PERMANENT

(30) Priorität: 27.06.1996 DE 19625752
(43) Veröffentlichungstag der Anmeldung: 07.04.1999
(73) Patentinhaber: Haake, André, 46354 Südlohn (DE); Haake, Oliver, 46354 Südlohn (DE); Haake, Patrick, 46354 Südlohn (DE)
(72) Erfinder: Haake, André, 46354 Südlohn (DE); Haake, Oliver, 46354 Südlohn (DE); Haake, Patrick, 46354 Südlohn (DE)
(74) Vertreter: Habbel, Hans-Georg, Dipl.-Ing.
(86) Internationale Anmeldenummer: DE9701349
(87) Internationale Veröffentlichungsnummer: WO9800620

(56) Entgegenhaltungen:
- EP-A- 0 497 692
- EP-A- 0 617 498
- DE-A- 4 118 219
- US-A- 3 651 332

## Beschreibung

Die Erfindung bezieht sich auf eine elektrische Schalteinrichtung gemäß dem Oberbegriff des Hauptanspruches.

Derartige elektrische Schalteinrichtungen sind z. B. in der EP 234 523 B1 beschrieben, und zwar im Zusammenhang mit einer Schließkantensicherung. Derartige Schließkantensicherungssysteme sind für den Einsatz an motorisch betriebenen Türen und Toren in Gebäuden und öffentlichen Verkehrsmitteln, verfahrbaren Regalen und an Schutzeinrichtungen für Maschinen vorgesehen. In der eigentlichen Schaltleiste fließt ein Ruhestrom, der von einer Auswerteeinheit überwacht wird. Die Kontaktgabe erfolgt durch die Unterbrechung des Ruhestromes. Nach Entlastung tritt eine automatische Rückstellung zur Schließung des Ruhestromkreises ein.

Die sogenannte Auswerteeinheit - oder auch Relaissicherheitskombination genannt - ist im Stand der Technik ebenfalls in vielfältiger Form bekannt und überwacht sich ständig selbst im Ruhestromprinzip. Fehler, wie Kurzschluß-Kabelbruch-Profilunterbrechungen und Falschanschluß führen zum Abschalten der Lastschaltkreise. Im Stand der Technik sind derartige Auswertegeräte mit der Fachbezeichnung "Relais-Sicherheitskombination" bezeichnet.

Bei diesen bekannten Anordnungen liegt der Nachteil vor, daß ein einseitiger Erdschluß nicht erkannt wird, da die Einrichtung weiterhin funktionsfähig bleibt.

Der Erfindung liegt die Aufgabe zugrunde, eine Leitungsüberwachung zu schaffen, die sowohl einen einfachen Erdschluß aufzeigt wie auch bei Kurzschluß entsprechend reagiert.

Diese der Erfindung zugrundeliegende Aufgabe wird durch die Merkmale des kennzeichnenden Teiles des Hauptanspruches gelöst, d. h. dadurch, daß die elektrische Zu- und Ableitung des Ruhestromkreises zum Signalgeber je mit einem leitenden Sicherheitsschirm ummantelt sind, der einenendes an das Erdpotential des Signalgebers, z. B. an die Befestigungsleiste einer Schaltleiste anschließt und anderenendes an den Schutzleiteranschluß der Relaissicherheitskombination anschließt, wobei der Sekundärstromkreis des Transformators in der Relaissicherheitskombination einseitig mit dem Sicherheitsschirm verbunden ist.

Wird eine solche Anordnung in Verbindung mit einer Schließkantensicherung eingesetzt, tritt schon bei Erdschluß der Zu- oder Ableitung des Ruhestromkreises ein Steuersignal auf, das ein Abschalten der Laststromkreise bewirkt.

Die EP-A-0 617 498 zeigt eine geerdete Abschirmung einer zweidrahtigen Versorgungsleitung zu einem Verbraucher. Eine Übertragung dieser bekannten Schutztechnik auf eine mit einem Ruhestromkreis arbeitende Überwachungsschaltung hätte die Auftrennung der Abschirmung auf die in diesem Fall getrennten Zu- und Ableitung erforderlich gemacht.

Zur Verdeutlichung der Erfindung wird in der Anlage ein Blockschaltbild einer im Stand der Technik bekannten Relaissicherheitskombination Typ: "BN 5983" beigefügt, wobei in dieses Blockschaltbild die erfindungsgemäße Schirmung zusätzlich eingezeichnet ist.

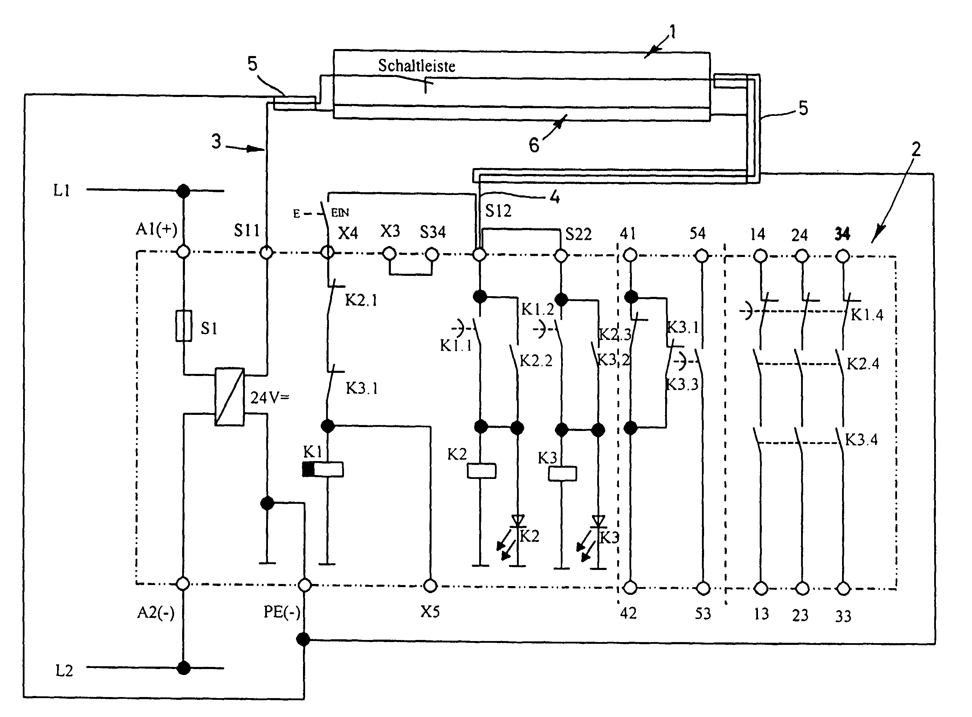

In der Zeichnung ist mit 1 die Schaltleiste und mit 6 die Befestigungsleiste für die Schaltleiste 1 dargestellt, wobei üblicherweise die Befestigungsleiste 6 aus Metall besteht. In die Schaltleiste 1 liegt oberhalb der Befestigungsleiste 6 der eigentliche Leiter 3, so wie im Stand der Technik bekannt.

Erfindungsgemäß ist dieser Leiter 3 mit einer Sicherheitsschirmung 5 umgeben, die einenendes an das Erdpotential des Signalgebers, d. h. gemäß der Zeichnung an die Befestigungsleiste 6 der Schaltleiste 1 anschließt. Anderenendes ist die Sicherheitsschirmung 5 über eine entsprechende Leitung an den Schutzleiteranschluß PE(-) der Relaissicherheitskombination 2 angeschlossen, so daß dadurch schon bei Erdschluß der Zu- oder Ableitung des Ruhestromkreises ein Abschalten der Laststromkreise bewirkt wird.

## Patentansprüche

1. Elektrische Schalteinrichtung mit einer Schaltleiste als Signalgeber, die bei Unterbrechung eines Ruhestromkreises zu einer Schaltfunktion führt, wobei in den Ruhestromkreis eine Relaissicherheitskombination (2) eingeschaltet ist, **dadurch gekennzeichnet, daß** die elektrische Zu- und Ableitung (3, 4) des Ruhestromkreises zur Schaltleiste (1) je mit einem leitenden Sicherheitsschirm (5) ummantelt sind, der einenendes an das Erdpotential des Signalgebers, z. B. an die Befestigungsleiste (6) der Schaltleiste (1), und anderenendes an den Schutzleiteranschluß (PE(-)) der Relaissicherheitskombination (2) anschließt, wobei der Sekundärstromkreis eines Transformators in der Relaissicherheitskombination einseitig mit den Sicherheitsschirmen verbunden ist.

2. Elektrische Schalteinrichtung nach Anspruch 1, **dadurch gekennzeichnet, daß** der Signalgeber als Schältleiste (1) für eine Schließkantensicherung ausgebildet ist.

## Claims

1. An electrical switching device having a switching strip as a signal transmitter which results in a switching operation when a closed circuit is interrupted, wherein a safety relay combination (2) is connected into the closed circuit, **characterised in that** the electrical feed and return lines (3, 4) of the closed circuit from and to the switching strip (1) are each sheathed with a conducting safety screen (5), one end of which is connected to the earth potential of the signal transmitter, e.g. to the fixing strip (6) of the switching strip (1), and the other end of which is connected to the protective conductor connection (PE(-)) of the safety relay combination (2), wherein one side of the secondary circuit of a transformer in the safety relay combination is connected to the safety screens.

2. An electrical switching device according to claim 1, **characterised in that** the signal transmitter is constructed as a switching strip (1) for a closing edge safety device.

## Revendications

1. Commutateur électrique avec une barre de commutation comme capteur de signaux qui conduit à une fonction de commutation en cas d'interruption d'un circuit à courant permanent, une combinaison de sécurité à relais (2) étant intégrée dans le circuit à courant permanent, **caractérisé en ce que** la ligne électrique du circuit à courant permanent qui arrive à la barre de commutation (1) et celle qui part de cette barre (3,4) sont respectivement entourées d'un blindage de sécurité conducteur (5) qui est raccordé d'un côté au potentiel de terre du capteur de signaux, par exemple à la barre de fixation (6) de la barre de commutation (1), et de l'autre côté au point de branchement du conducteur de protection (PE (-)) de la combinaison de sécurité à relais (2), le circuit de courant secondaire d'un transformateur étant relié unilatéralement avec les blindages de sécurité dans la combinaison de sécurité à relais.

2. Commutateur électrique selon la revendication 1, **caractérisé en ce que** le capteur de signaux est réalisé en tant que barre de commutation (1) pour une protection des bords qui se touchent à la fermeture.
